# EUROPÄISCHE PATENTSCHRIFT

(11) **EP 3 069 958 B1**
(45) Veröffentlichungstag und Bekanntmachung des Hinweises auf die Patenterteilung: **20.03.2019**
(21) Anmeldenummer: 16160703.1
(22) Anmeldetag: 16.03.2016
(51) Int. Cl.: B62B 5/06

(54) **ZUGGESCHIRR**
HARNESS
HARNAIS

(30) Priorität: 20.03.2015 DE 102015104253; 15.04.2015 DE 102015105748
(43) Veröffentlichungstag der Anmeldung: 21.09.2016
(73) Patentinhaber: Croozer GmbH, 50825 Köln (DE)
(72) Erfinder: Harbeke, Christian, 8006 Zürich (CH); Jeuch, Linus, 5400 Baden (CH); Thüring, Lukas, 4056 Basel (CH)
(74) Vertreter: Lenzing Gerber Stute

(56) Entgegenhaltungen:
- WO-A1-2006/047863
- DE-A1-102005 011 943
- DE-U1- 20 212 789
- US-A1- 2006 108 756
- US-A1- 2006 237 918
- US-A1- 2008 174 078

## Beschreibung

Die vorliegende Erfindung betrifft ein Zuggeschirr zum Ziehen eines Anhängers, insbesondere eines Anhängers zum Transport von Lasten oder Kindern, mit einem Hüftgurt und einem daran befestigten Zuggestänge mit einer rechten und einer linken Zugstange, die im Bereich ihrer in Zugrichtung vorderen Enden mit dem Hüftgurt verbunden und an ihren in Zugrichtung hinteren Enden mit einem Anhänger verbindbar sind. Ein derartiges Zuggeschirr wird von der US 2006/0237918 A1 gezeigt.

Aus dem Stand der Technik sind verschiedene Zuggeschirre für Fahrradanhänger bekannt. Unter der Marke Chariot wird ein Ski-Set angeboten, das aus einem Paar an einen Fahrradanhänger ansteckbaren Ski sowie einem Zuggeschirr besteht. Das Zuggeschirr besteht aus einem Hüftgurt und einem Paar Teleskopstangen. Die Teleskopstangen können mit ihren in Zugrichtung hinteren Enden mit der Vorderseite eines Fahrradanhängers verbunden werden. Die Vorderseite der Zugstangen ist über ein im Wesentlichen horizontal vom Hüftgurt abstehendes Achsstück, das ein vertikales Verschwenken der Zugstangen ermöglicht, fest an dem Hüftgurt befestigt. Der Hüftgurt wird um die Hüfte geschnallt. Mit diesem Ski-Set wird einem SkiLangläufer ermöglicht, beim Langlaufen den dafür mit Skiern ausgerüsteten Fahrradanhänger hinter sich herzuziehen. Nachteilig an diesem Zuggeschirr ist zum einen, dass es die Beweglichkeit des Langläufers merklich einschränkt. Außerdem ist der Langläufer insbesondere beim Anfahren und Bremsen durch den Anhänger starken Lastwechseln ausgesetzt. Außerdem sind die Nickbewegungen am gezogenen Anhänger vergleichsweise hoch, wodurch insbesondere der Fahrkomfort für Kinder im Anhänger beeinträchtigt ist. Eine derartige Verbindung von einem Zuggestänge mit einem Hüftgurt mit den gleichen Nachteilen ist auch aus der US 2006/0237918 A1 für einen einspurigen Lastenanhänger bekannt.

Von der Firma Nordic Cab wird ein weiteres Ski-Set mit einem Zuggeschirr angeboten, das ebenso einen Hüftgurt mit Schulterriemen und ein Paar Teleskopstangen aufweist. Im Unterschied zu den Teleskopstangen des Ski-Sets der Marke Chariot sind die Teleskopstangen von Nordic Cab an ihrem in Zugrichtung vorderen Ende mit einem länglichen elastischen Kunststoffstück ausgebildet, das sich im Wesentlichen in Richtung der Teleskopstange erstreckt. Das Elastomerstück dient unter anderem der Überbrückung des Unterschieds zwischen dem horizontalen Abstand der Zugstangen und der Breite des Hüftgurtträgers. Am vorderen Ende des Elastomerstücks ist ein Karabinerhaken frei verschwenk- und drehbar angelenkt, der in eine jeweils seitlich am Hüftgurt vorgesehene Metallöse eingehängt wird. Um zu vermeiden, dass das Elastomerstück im Zugbetrieb allzu sehr am Körper scheuert, weist der Hüftgurt seitlich zusätzliche Schutzlappen auf. Dennoch kann das Scheuern als lästig empfunden werden. Zwar sind die Nickbewegungen des gezogenen Anhängers während der Fahrt gegenüber dem Chariot-Modell vergleichsweise gering, allerdings sind die Dämpfungseigenschaften bei Lastwechseln von Zug auf Druck, nicht optimal, nicht zuletzt weil durch den frei in die Metallöse eingesetzten Karabinerhaken bei Lastwechseln eine ungebremste und ungedämpfte Strecke von mehreren Zentimetern entsteht, so dass Lastwechsel stoßartig auf den Hüftgurt übertragen werden können. Dies kann als unangenehm empfunden werden.

Aus der DE 10 2005 011 943 A1 ist ein Zuggeschirr bekannt, bei dem Zugstangen mit einem Hüftgurt mittels flexibler Gurte verbunden sind. Auch bei dieser Ausführung besteht der oben genannte Nachteil, dass bei Lastwechseln eine ungebremste und ungedämpfte Strecke von mehreren Zentimetern entsteht.

Aus der US 2006/0108756 A1 ist ein Gestänge zum Schieben eines Kinderwagens bekannt, bei dem die Stangen den Kinderwagen mit einem Hüftgurt verbinden. Dabei sind in den Stangen elastische Elemente zur Dämpfung von Stößen vorgesehen. Nachteilig bei dieser Ausführung ist eine begrenzte Entkopplung durch die elastischen Elemente, da diese in Richtung ihrer größten Zugfestigkeit beansprucht werden, und jederzeit eine ausreichende Kontrolle über den Kinderwagen beim Schieben gewährleisten müssen.

Demgegenüber liegt der vorliegenden Erfindung die Aufgabe zugrunde, ein Zuggeschirr bereitzustellen, dessen Tragekomfort im Zugbetrieb deutlich verbessert ist.

Diese Aufgabe wird erfindungsgemäß bei einem Zuggeschirr der eingangs genannten Art mit den Merkmalen des Anspruchs 1 gelöst, nämlich dadurch, dass am jeweils vorderen Ende jeder der Zugstangen ein davon quer abstehendes Armstück aus Gummi oder einem Gummi enthaltenden Verbundwerkstoff vorgesehen ist, wobei der der Zugstange abgewandte Kopf des Armstücks Befestigungsmittel zu seiner Verbindung mit dem Hüftgurt aufweist.

Mit dem erfindungsgemäßen Zuggeschirr ist es möglich, die Zugstangen deutlich unterhalb des Hüftgurtes zu führen und damit unterhalb der Hüfte zu führen. Dadurch ist die Bewegungsfreiheit des Trägers bedeutend weniger eingeschränkt, als es bei den vorbekannten Zuggeschirren der Fall ist. Außerdem wird durch das quer zur Zugrichtung verlaufende Armstück aus Gummi oder einem Gummi enthaltenden Verbundwerkstoff erreicht, dass durch die Zugstange auf den Hüftgurt und damit auf den Träger des Hüftgurts wirkende Lastwechsel besonders effektiv gedämpft werden, da das Armstück anders als bei dem Elastomerstück der Firma Nordic Cap nicht gestreckt und gestaucht wird, sondern sich bei Lastwechseln im Wesentlichen quer zur Zugrichtung verformen kann. Gummi weist zudem selbst bei unterschiedlichen Temperaturen und hoher Dauerbelastung eine hohe Haltbarkeit auf.

Als Zugstangen sind wie bei den vorbekannten Zuggeschirren insbesondere Teleskopstangen verwendbar. Sie haben den Vorteil, dass ihre Länge an den Verwendungszweck angepasst werden kann. Beispielsweise kann eine größere Länge eingestellt werden, um den nötigen Bewegungsfreiraum bei Verwendung des Zuggeschirrs zum Ziehen eines Anhängers beim Ski-Langlauf zu schaffen, oder die Zugstangen können verkürzt werden, um das Zuggeschirr beim Wandern zu verwenden, da für die Beine des Trägers nicht so viel Bewegungsfreiraum benötigt wird. Eine kürzere Länge der Zugstangen hat zwangsläufig den Vorteil, dass das Gespann aus Ziehendem und Anhänger kürzer und damit wendiger wird. Teleskopstangen müssen aber nicht verwendet werden, einfache Stangen, die gegebenenfalls zusammensteckbar und wieder voneinander lösbar sind, reichen vollkommen aus.

Die Zugstangen können aus einer Vielzahl geeigneter Werkstoffe, insbesondere als Rohr, hergestellt sein. Üblicherweise wird man die Zugstangen im Rahmen einer Abwägung aus Kosten und Gewicht derzeit aus einem Aluminiumrohrmaterial herstellen.

Die Zugstangen müssen nicht zwingend gerade sein. Sie können insbesondere in ihrem in Zugrichtung hinteren Bereich auch gekrümmt oder gekröpft sein, um einen etwaigen Breitenunterschied zwischen den Aufnahmen für die hinteren Enden der Zugstangen und dem Abstand der Zugstangen an ihren vorderen Enden, der im Wesentlichen etwas breiter als ein durchschnittlicher Hüftgurtträger sein sollte, auszugleichen.

Vorzugsweise schließt jedes der Armstücke mit dem Abschnitt der Zugstange, an dem es befestigt ist, einen Winkel von zwischen 60 und 120° ein. Das Armstück kann insbesondere senkrecht von der Zugstange abstehen, oder aber gegenüber der Zugstange in Zugrichtung nach vorne oder auch nach hinten geneigt sein. Es kann auch in Zugrichtung nach vorn oder hinten gekrümmt sein. Unter dem Winkel wird der Winkel zwischen einer zentralen Achse des Armstücks verstanden, die mittig durch den Befestigungspunkt des Armstücks am Hüftgurt und an der armstückseitigen Oberfläche der Zugstange durch die Mitte des Abschnitts (gesehen in Richtung der Zugstange) verläuft, mit dem das Armstück die Zugstange umgreift oder zumindest an der Zugstange anliegt.

In einer weiteren bevorzugten Ausgestaltung der Erfindung weist jede der Zugstangen ein in Zugrichtung vorderes Rohrstück auf, an dem das Armstück befestigt ist und das lösbar mit dem Rest der Zugstange verbunden ist. Eine lösbare Verbindung kann beispielsweise mit einfachen oder paarweise gegenüberliegenden, federnd gelagerten Rastköpfen am Rohrstück sein, die in entsprechende Aufnahmen im Rohr der Zugstange, in das es eingesetzt wird, eingreift.

In einer bevorzugten Ausgestaltung der Erfindung hat der Querschnitt des Armstücks in Zugrichtung eine größere Ausdehnung als senkrecht zur Zugrichtung. Dies hat den Vorteil, dass das Armstück in Zugrichtung, in der die größeren Kräfte auftreten, deutlich steifer als quer zur Zugrichtung ist. So können die Kräfte in Zugrichtung optimal gedämpft werden. Allerdings ist auch die Ausdehnung des Querschnitts des Armstücks quer zur Zugrichtung vorzugsweise so groß bemessen, dass sich das Armstück nicht oder allenfalls wenig zum Körper hin durchbiegt und ebenso nicht oder allenfalls wenig aufgrund der daran angreifenden Kräfte tordiert.

Der Querschnitt des Armstücks kann über seine Länge konstant sein. Es hat sich aber als vorteilhaft erwiesen, wenn sich der Querschnitt des Armstücks insbesondere in seiner Ausdehnung in Zugrichtung zum Kopf hin verjüngt. Hierdurch wird das Armstück zum Kopf hin in Zugrichtung verformbarer.

Im Kopf jedes Armstücks kann in einer weiteren bevorzugten Ausführungsform ein Durchgangsloch quer zur Zugrichtung vorgesehen sein, mit dem der Kopf auf ein am Hüftgurt befestigtes, quer davon abstehendes Achsstück aufsteckbar ist und insbesondere mittels einer Schraub- oder Rastverbindung festsetzbar und wieder davon lösbar ist. Diese Ausführungsform ist einfach, ermöglicht eine sichere Verbindung, und das Armstück ist ohne eine Weglose um die Achse herum drehbar am Hüftgurt befestigt.

Alternativ hierzu kann der Kopf jedes Armstücks über eine Steckschnalle mit dem Hüftgurt verbunden sein. Dabei kann das eine Schnallenstück über einen kurzen Gurt mittels einer Niete am Hüftgurt befestigt sein, wobei es eine gute Rotationsfreiheit hat. Das Schnallengegenstück kann beispielsweise ebenso mit einem Gurt mithilfe einer oder mehrerer Nieten oder Schrauben am Armstück befestigt werden.

Im Bereich der Befestigung der Armstücke am Hüftgurt kann der Hüftgurt auf seiner dem Benutzer zugewandten Innenseite gepolstert und/oder verstärkt sein. Vorzugsweise kann hierfür beispielsweise eine Elastomer-Platte verwendet werden, die sich optimal an die Körperform des Trägers anpassen kann.

Vorzugsweise weist der Hüftgurt Mittel zum Verkürzen oder Verlängern seines Rückenteils auf, wobei hier unter Rückenteil der Teil des Gurtes verstanden wird, der, wenn er von einem Nutzer angelegt wurde, entlang des Rückens des Nutzers verläuft. Als besonders praktisches Mittel zum Verkürzen oder Verlängern des Rückenteils des Hüftgurts hat sich ein Druckknopfsystem erwiesen, mit dem zum Verkürzen des Rückenteils Schlaufen unterschiedlicher Länge erzeugt werden können.

Der Tragekomfort des Zuggeschirrs kann erheblich mit mindestens einem am Hüftgurt befestigten Schultergurt erhöht werden. Durch einen Schultergurt bzw. ein Paar von Schultergurten können die von dem Anhänger über die Zugstangen auf den Hüftgurt aufgebrachten vertikalen Lasten vergleichsweise gleichmäßig auf die Hüfte und die Schulter(n) des Nutzers verteilt werden.

Um das Handling des erfindungsgemäßen Zuggeschirrs weiter zu vereinfachen und komfortabler zu gestalten, kann am zugstangenseitigen Teil jedes Armstücks ein insbesondere die Zugstange umschließender Handgriff ausgebildet sein. So kann der Nutzer die Zugstangen an den Handgriffen bequem halten, beispielsweise wenn er die Zugstangen anheben möchte, um sie mit dem Hüftgurt zu verbinden. Auch beim Wandern können die Handgriffe hilfreich sein, weil der Nutzer wahlweise seine Hände an den Handgriffen abstützen kann oder aber den Anhänger gezielt mit den Händen führen kann. Auch können die Zugstangen während des Wanderns oder Laufens an den Handgriffen angehoben werden, um so die Hüfte und oder die Schultern zu entlasten.

Im Folgenden wird die Erfindung anhand von Figuren, die bevorzugte Ausführungsbeispiele zeigen, näher erläutert.

Es zeigen:
- Fig.1: eine Aufsicht auf einen Fahrradanhänger mit Zugstangen eines erfindungsgemäßen Zuggeschirrs;
- Fig. 2: eine Seitenansicht des in Fig. 1 dargestellten Fahrradanhängers samt Zugstange;
- Fig. 3: eine Seitenansicht eines Teils der in Fig. 1 gezeigten Zugstange;
- Fig. 4: eine Aufsicht auf die in Fig. 3 dargestellte Zugstange;
- Fig. 5a: eine Seitenansicht eines Armstücks des in Fig. 1 gezeigten erfindungsgemäßen Zuggeschirrs;
- Fig. 5b, 5c und 5d: Querschnitte des in Fig. 5a gezeigten Armstücks;
- Fig. 6: einen Hüftgurt in einer ersten erfindungsgemäßen Ausführungsform;
- Fig. 7a und 7b: einen Teilaspekt des in Fig. 6 dargestellten Hüftgurts;
- Fig. 8: einen Hüftgurt in einer zweiten erfindungsgemäßen Ausführungsform; und
- Fig. 9: eine Ausführungsform einer Verbindung von Armstück und Hüftgurt.

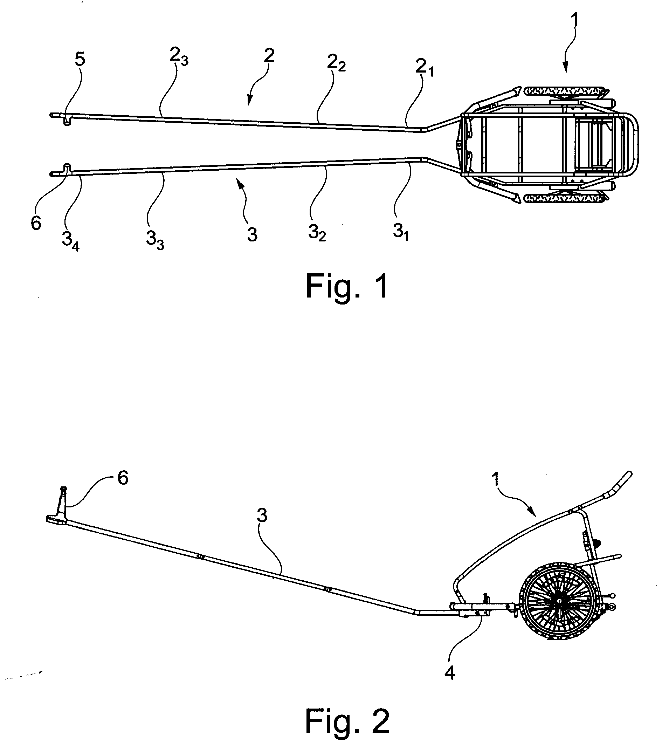

In den Figuren 1 und 2 ist das Rahmengestell 1 eines Multifunktions-Fahrradanhängers gezeigt. An seiner Vorderseite sind zwei Zugstangen 2, 3 befestigt. Zur Befestigung sind die Zugstangen mit ihrem in Zugrichtung hinteren Ende in Aufnahmen 4 eingesetzt, die auch zum Aufnehmen von Gabelarmen für ein zentrales Vorderrad gedacht sind. Am vorderen Ende der Zugstangen sind Armstücke 5, 6 vorgesehen, über die die Zugstangen mit einem hier nicht dargestellten Hüftgurt verbunden werden.

Die Zugstangen 2, 3 bestehen jeweils aus vier Rohrstücken 2₁, 2₂, 2₃, 2₄, 3₁, 3₂, 3₃, 3₄. Die einzelnen Rohrstücke einer Zugstange sind ineinander steckbar und werden über federnd gelagerte Rastköpfe und hierfür vorgesehene Rastkopfaufnahmen in den Rohren miteinander befestigt.

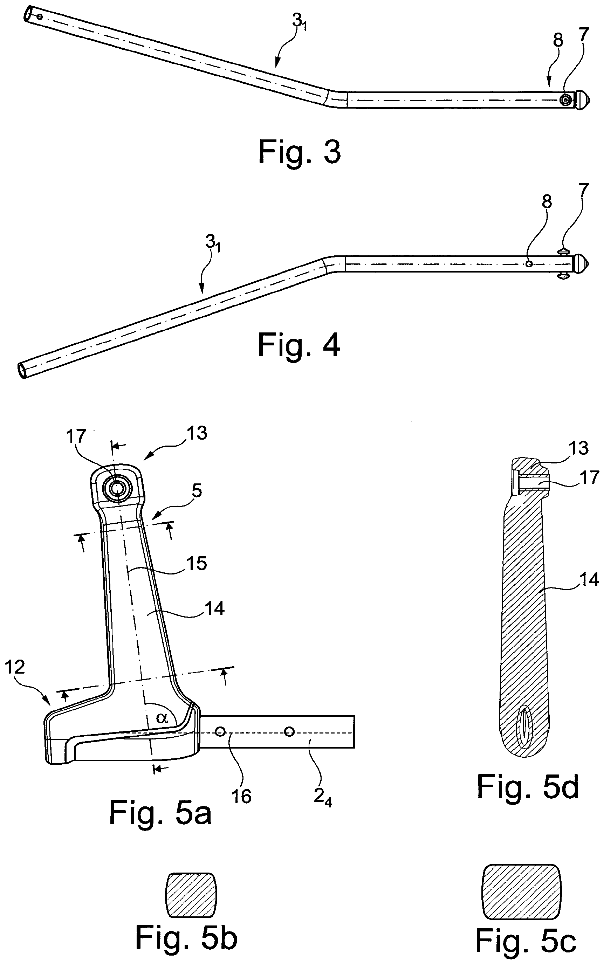

Die hinteren Rohrstücke 2₁, 3₁ weisen, wie insbesondere auch in den Figuren 3 und 4 zu sehen ist, einen gekrümmten Abschnitt auf, in dem sie in der Horizontalen leicht nach außen abgewinkelt sind. Darüber hinaus ist die Zugstange 2, 3 an dieser Stelle auch in der Vertikalen leicht abgewinkelt. Wie insbesondere in Figur 1 zu sehen ist, sind die Aufnahmen 4 für die Gabelarme des Fahrradanhängers 1 derart, dass die darin eingesetzten Zugstangen 2, 3 zunächst aufeinander zu laufen. Die Krümmung in der Horizontalen ist derart gewählt, dass der Abstand der Zugstangen an ihren vorderen Enden für eine Person ausreichend breit ist, die Krümmung in der Vertikalen so, dass die Zugstangen 2, 3 bei waagerecht stehendem Fahrradanhänger mit ihren vorderen Enden etwa auf Höhe etwas unterhalb der Hüfte einer typischen Person sind.

Das in den Figuren 3 und 4 gezeigte, am hinteren Ende des hinteren Rohrstücks 3₁ angeordnete, quer zu seiner Längsrichtung verlaufende Achsstück 7 dient zum Positionieren und Arretieren des Rohrstücks in der Gabelaufnahme 4, das Loch 8 zum Sicherstellen, dass die Zugstangen nicht vertauscht eingesetzt werden.

Die Figuren 5a bis 5d zeigen ein Ausführungsbeispiel eines erfindungsgemäßen Armstücks 5. Es weist einen zugstangenseitigen Abschnitt 12, einen Kopf 13 und einen dazwischen liegenden Steg 14 auf. Der zugstangenseitige Abschnitt 12 umschließt das vordere Ende des vorderen Rohrstücks 2₄ der Zugstange 2. Der in Zugrichtung sich nach hinten versetzt an dem zugstangenseitigen Abschnitt 12 anschließende Steg 14 ist leicht nach vorn gekippt. Seine Symmetrieachse 15 schließt mit der Achse 16 des vorderen Zugstangenabschnitts einen Winkel α von etwa 100° ein. Der Steg 14 hat, wie sich aus den Schnittansichten A-A und B-B der Figuren 5b und 5c sowie dem Längsschnitt 5d ergibt, einen sich zum Kopf 13 hin verjüngenden Querschnitt, wobei der nahezu rechteckige Querschnitt in Zugrichtung eine größere Ausdehnung hat als quer dazu, und wobei die Dicke des Stegs 14 über seine Höhe im Wesentlichen konstant bleibt.

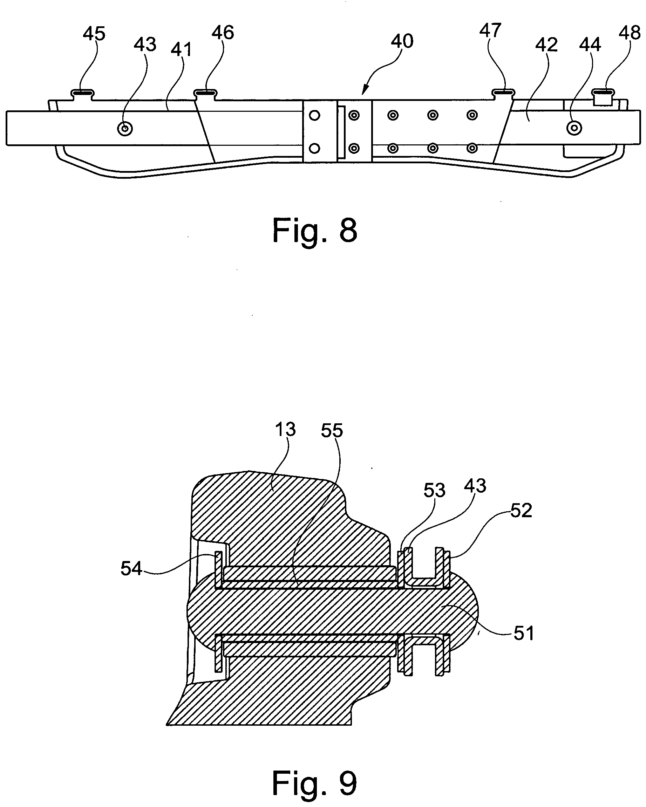

Der Steg 14 des Armstücks 5 ist in Richtung quer zur Zugrichtung in etwa um 10° zum Träger hin nach innen geneigt. Der Kopf 13 ist verjüngt ausgebildet, so dass er unter Einwirkung vergleichsweise geringer Kräfte abwinkeln kann und in Gebrauchsposition im Wesentlichen senkrecht steht. Der Kopf 13 weist ein Durchgangsloch 17 auf, das als Aufnahme für ein Achsstück eines Hüftgurts dient, wie er beispielsweise mit Bezugnahme auf die Figuren 8 und 99 beschrieben ist.

Ist der vordere Teil des zugstangenseitigen Abschnitts 12 lang genug, kann er als Handgriff dienen und gegebenenfalls hierfür ergonomisch ausgeformt sein.

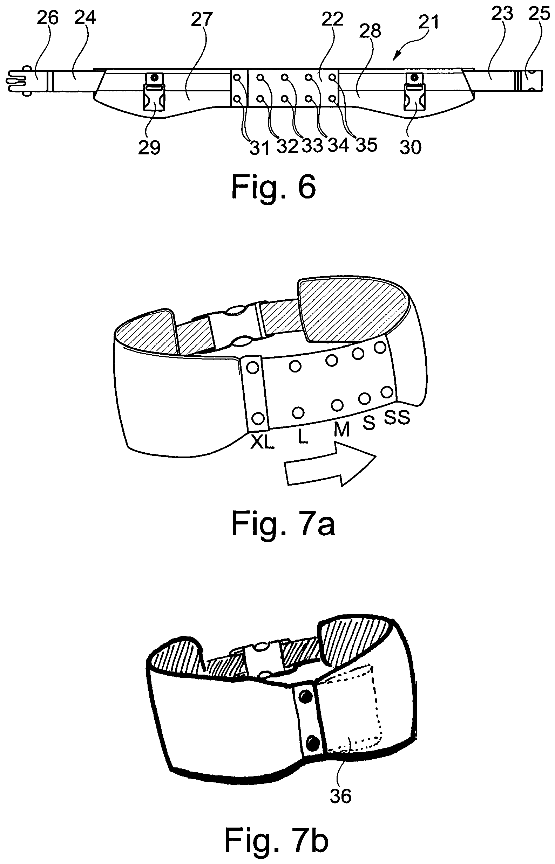

In Figur 6 ist ein für ein erfindungsgemäßes Zuggeschirr geeigneter Hüftgurt 21 dargestellt. Er weist einen zentrales Rückenabschnitt 22 auf, an den sich zu beiden Seiten jeweils ein Gurt 23, 24 anschließt. An den freien Enden der Gurte 23, 24 sind Schließen 25, 26 vorgesehen. Der Gurt weist abschnittsweise eine Umhüllung 27, 28 auf, die auf ihrer Innenseite gepolstert und ebenso wie die Gurte 23, 24 mit dem Rückenabschnitt 22 verbunden sind. An jeder der Umhüllungen 27, 28 ist jeweils ein Steckschnallenelement 29, 30 befestigt, das dazu vorgesehen ist, mit einem am Kopf eines Armstücks befestigten Schnallenelement zur Befestigung des Armstücks am Hüftgurt zusammenzuwirken.

Am Rückenabschnitt 22 des Hüftgurts 21 sind ein Paar Druckknopfelemente 31 übereinander angeordnet, die mit auf einer Seite hiervon in gleichmäßigen Abständen angeordneten Druckknopfelementpaaren 32, 33, 34, 35 zusammenwirken können. Wie den Figuren 7a und 7b zu entnehmen ist, kann durch das Aufdrücken der Druckknopfelemente 31 auf die Druckknopfelemente 32, 33, 34 oder 35 im Rückenstück 22 eine Schlaufe 36 gebildet werden, um den Umfang des Hüftgurtes einzustellen.

Der in Figur 8 dargestellte Hüftgurt 40 unterscheidet sich von dem in Figur 6 dargestellten Hüftgurt dadurch, dass jeder der Gurte 41, 42 anstelle von Steckschnallenelementen jeweils eine Öse 43, 44 zur Aufnahme eines Achsstücks zur Befestigung des Kopfs eines Armstücks aufweist. Außerdem unterscheidet sich der in Figur 8 dargestellte Hüftgurt von dem in Figur 6 dargestellten darin, dass an seiner Oberkante Gurtösen 45 - 48 zur Befestigung von hier nicht dargestellten Schultergurten vorgesehen sind.

Figur 9 zeigt eine Verbindung zwischen dem in Figur 8 dargestellten Hüftgurt und dem in Figur 5 dargestellten Armstück. Das Achsstück ist hier als Niete 51 ausgebildet, es kann aber ebenso gut beispielsweise mit einer Schraube und einer darauf aufgesetzten Mutter ausgeführt sein. Die Niete 51 oder Schraube ist durch die Öse 43 hindurchgeführt, wobei die Öse 43 zwischen zwei Unterlegscheiben 52, 53 sitzt.

Zwischen der Unterlegscheibe 53 und einer weiteren Unterlegscheibe 54 ist eine auf dem Nietbolzen bzw. dem Schraubenbolzen sitzende Hülse 55 angeordnet, die durch das Durchgangsloch 17 im Kopf 13 des Armstücks 5, 6 geführt ist. Die Länge der Niete 51 ist so bemessen, dass der Kopf 13 des Armstücks 5, 6 und die Öse 43 des Hüftgurts 40 darauf mit leichtem seitlichen Spiel sitzen, so dass sie frei um das Achsstück herum verschwenkbar sind.

## Patentansprüche

1. Zuggeschirr zum Ziehen eines Anhängers (1), insbesondere eines Anhängers zum Transport von Lasten oder Kindern, mit einem Hüftgurt (21, 40) und einem daran befestigten Zuggestänge mit einer rechten und einer linken Zugstange (2, 3), die im Bereich ihrer in Zugrichtung vorderen Enden mit dem Hüftgurt (21, 40) verbunden und an ihren in Zugrichtung hinteren Enden mit dem Anhänger (1) verbindbar sind, **dadurch gekennzeichnet, dass** am jeweils in Zugrichtung vorderen Ende jeder der Zugstangen ein davon quer abstehendes Armstück (5, 6) aus Gummi oder einem Gummi enthaltenden Verbundwerkstoff vorgesehen ist, wobei der der Zugstange (2, 3) abgewandte Kopf (13) des Armstücks (5, 6) Befestigungsmittel zu seiner Verbindung mit dem Hüftgurt (21, 40) aufweist.

2. Zuggeschirr nach Anspruch 1, **dadurch gekennzeichnet, dass** jedes der Armstücke (5, 6) mit dem Abschnitt der Zugstange (2, 3), an dem es befestigt ist, einen Winkel (α) von zwischen 60 und 120° einschließt.

3. Zuggeschirr nach Anspruch 1 oder 2, **dadurch gekennzeichnet, dass** jede der Zugstangen (2, 3) ein in Zugrichtung vorderes Rohrstück (2₄, 3₄) aufweist, an dem das Armstück (5, 6) befestigt ist und das lösbar mit dem Rest der Zugstange verbunden ist.

4. Zuggeschirr nach einem der vorhergehenden Ansprüche, **dadurch gekennzeichnet, dass** der Querschnitt des Armstücks (5, 6) in Zugrichtung eine größere Ausdehnung hat als senkrecht zur Zugrichtung.

5. Zuggeschirr nach einem der vorhergehenden Ansprüche, **dadurch gekennzeichnet, dass** sich der Querschnitt des Armstücks (5, 6) insbesondere in seiner Ausdehnung in Zugrichtung zum Kopf (13) hin verjüngt.

6. Zuggeschirr nach einem der vorherstehenden Ansprüche, **dadurch gekennzeichnet, dass** das Armstück (5, 6) quer zur Zugrichtung zum Kopf (13) hin gekrümmt ist.

7. Zuggeschirr nach einem der vorhergehenden Ansprüche, **dadurch gekennzeichnet, dass** im Kopf (13) jedes Armstücks (5, 6) ein Durchgangsloch (17) quer zur Zugrichtung vorgesehen ist, mit dem der Kopf (13) auf ein am Hüftgurt (40) befestigtes, quer davon abstehendes Achsstück (51) aufsteckbar ist und insbesondere mittels einer Schraub- oder Rastverbindung festsetzbar und wieder davon lösbar ist.

8. Zuggeschirr nach einem der Ansprüche 1 bis 6, **dadurch gekennzeichnet, dass** der Kopf jedes Armstücks über eine Steckschnalle (29, 30) mit dem Hüftgurt (21) verbunden ist.

9. Zuggeschirr nach einem der vorstehenden Ansprüche, **dadurch gekennzeichnet, dass** der Hüftgurt (21, 40) im Bereich der Befestigung der Armstücke (5, 6) auf seiner dem Benutzer zugewandten Innenseite gepolstert und/oder verstärkt ist.

10. Zuggeschirr nach einem der vorstehenden Ansprüche, **dadurch gekennzeichnet, dass** der Hüftgurt (21, 40) Mittel zum Verkürzen oder Verlängern seines Rückenteils, insbesondere ein Druckknopfsystem (31-35) zum Erzeugen von Schlaufen unterschiedlicher Länge, aufweist.

11. Zuggeschirr nach einem der vorstehenden Ansprüche, **gekennzeichnet durch** mindestens einen am Hüftgurt (40) befestigten Schultergurt.

12. Zuggeschirr nach einem der vorhergehenden Ansprüche, **dadurch gekennzeichnet, dass** am zugstangenseitigen Teil jedes Armstücks ein insbesondere die Zugstange (2, 3) umschließender Handgriff ausgebildet ist.

13. Zuggeschirr nach einem der vorhergehenden Ansprüche, **dadurch gekennzeichnet, dass** das Armstück einen zugstangenseitigen Abschnitt (12), einen Kopf (13) und einen dazwischenliegenden Steg (14) aufweist.

14. Zuggeschirr nach einem der vorhergehenden Ansprüche, **dadurch gekennzeichnet, dass** die Zugstangen (2,3) unterhalb des Hüftgurtes (21,40) mit dem Armstück verbunden sind.

## Claims

1. Harness for pulling a trailer (1), in particular a trailer for transporting loads or children, having a hip belt (21, 40) and a linkage of drawbars attached thereto with a right and a left drawbar (2, 3), which are connected to the hip belt (21, 40) in a region of their front ends in a pulling direction and which are connectable to the trailer (1) at their rear ends in the pulling direction, **characterised in that** at the respective front end of each of the drawbars, an arm piece (5, 6) from rubber or a rubber-containing compound material is provided, which projects transversely therefrom, wherein the top (13) of the arm piece (5, 6), which is remote from the drawbar (2, 3), has fastening means for the connection thereof with the hip belt (21, 40).

2. Harness according to claim 1, **characterised in that** each of the arm pieces (5, 6) includes an angle (α) of between 60 and 120° with the portion of the drawbar (2, 3) to which it is attached.

3. Harness according to claim 1 or 2, **characterised in that** each of the drawbars (2, 3) has a front tubular piece (2₄, 3₄) in the pulling direction, to which the arm piece (5, 6) is attached and which is releasably connected to the rest of the drawbar.

4. Harness according to any of the preceding claims, **characterised in that** the cross section of the arm piece (5, 6) has a greater extent in the pulling direction than vertically to the pulling direction.

5. Harness according to any of the preceding claims, **characterised in that** the cross section of the arm piece (5, 6) narrows towards the top (13), in particular in its extent in the pulling direction.

6. Harness according to any of the preceding claims, **characterised in that** the arm piece (5, 6) is curved towards the top (13) transversely to the pulling direction.

7. Harness according to any of the preceding claims, **characterised in that** the top (13) of each arm piece (5, 6) comprises a through hole (17) transversely to the pulling direction, by which the top (13) can be put on a shaft piece (51), which is attached to the hip belt (40) and projects transversely therefrom, and in particular is fixable and detachable therefrom again by a screw connection or a locking connection.

8. Harness according to any of the claims 1 to 6, **characterised in that** the top of each arm piece is connected to the hip belt (21) by a clip buckle (29, 30).

9. Harness according to any of the preceding claims, **characterised in that** the hip belt (21, 40) is padded and/or reinforced on its inside facing the user in the region of the attachment of the arm pieces (5, 6).

10. Harness according to any of the preceding claims, **characterised in that** the hip belt (21, 40) has means for shortening or lengthening a back part thereof, in particular a press stud system (31-35) for creating loops of different lengths.

11. Harness according to any of the preceding claims, **characterised by** at least one shoulder strap attached to the hip belt (40).

12. Harness according to any of the preceding claims, **characterised in that** a handle, in particular surrounding the drawbar (2, 3), is formed on a drawbar-side part of each arm piece.

13. Harness according to any of the preceding claims, **characterised in that** the arm piece has a drawbar-side section (12), a top (13) and a web (14) lying in between.

14. Harness according to any of the preceding claims, **characterised in that** the drawbars (2, 3) are connected to the arm piece below the hip belt (21, 40).

## Revendications

1. Harnais destiné à tirer une remorque (1), notamment une remorque servant à transporter des charges ou des enfants, comprenant une sangle abdominale (21, 40) et un arceau fixé à celle-ci comprenant une barre d'attelage de droite et de gauche (2, 3) qui, dans la zone de leurs extrémités avant dans le sens de la traction, sont reliées à la sangle abdominale (21, 40) et, au niveau de leurs extrémités arrière dans le sens de la traction, peuvent être reliées à la remorque (1), **caractérisé en ce qu'**à l'extrémité avant respective, dans le sens de la traction, de chacune des barres d'attelage se trouve un élément formant bras (5, 6) faisant saillie transversalement de celle-ci en caoutchouc ou en un matériau composite contenant du caoutchouc, la tête (13) de l'élément formant bras (5, 6) à l'opposé de la barre d'attelage (2, 3) possédant des moyens de fixation servant à sa liaison avec la sangle abdominale (21, 40).

2. Harnais selon la revendication 1, **caractérisé en ce que** chacun des éléments formant bras (5, 6) forme un angle (α) compris entre 60° et 120° avec la portion de la barre d'attelage (2, 3) à laquelle il est fixé.

3. Harnais selon la revendication 1 ou 2, **caractérisé en ce que** chacune des barres d'attelage (2, 3) possède un élément tubulaire (2₄, 3₄) avant dans le sens de la traction, auquel est fixé l'élément formant bras (5, 6) et qui est relié de manière amovible au reste de la barre d'attelage.

4. Harnais selon l'une des revendications précédentes, **caractérisé en ce que** la section transversale de l'élément formant bras (5, 6) présente une extension plus importante dans le sens de la traction que perpendiculairement au sens de la traction.

5. Harnais selon l'une des revendications précédentes, **caractérisé en ce que** la section transversale de l'élément formant bras (5, 6) se rétrécit en direction de la tête (13), notamment dans son extension dans le sens de la traction.

6. Harnais selon l'une des revendications précédentes, **caractérisé en ce que** l'élément formant bras (5, 6) est curviligne en direction de la tête (13) transversalement au sens de la traction.

7. Harnais selon l'une des revendications précédentes, **caractérisé en ce qu'**un trou traversant (17), transversal au sens de la traction, se trouve dans la tête (13) de chaque élément formant bras (5, 6), avec lequel la tête (13) peut être enfichée sur un élément formant axe (51) fixé à la sangle abdominale (40) et faisant saillie transversalement de celle-ci et peut notamment être fixée au moyen d'un assemblage par vis ou encliquetage et peut de nouveau en être détachée.

8. Harnais selon l'une des revendications 1 à 6, **caractérisé en ce que** la tête de chaque élément formant bras est reliée à la sangle abdominale (21) par le biais d'une boucle enfichable.

9. Harnais selon l'une des revendications précédentes, **caractérisé en ce que** la sangle abdominale (21, 40) est rembourrée et/ou renforcée dans la zone de la fixation des éléments formant bras (5, 6) sur son côté intérieur faisant face à l'utilisateur.

10. Harnais selon l'une des revendications précédentes, **caractérisé en ce que** la sangle abdominale (21, 40) possède des moyens pour raccourcir ou rallonger sa partie arrière, notamment un système de bouton-pression (31-35) servant à générer des boucles de différentes longueurs.

11. Harnais selon l'une des revendications précédentes, **caractérisé par** au moins une sangle d'épaule fixée à la sangle abdominale (40).

12. Harnais selon l'une des revendications précédentes, **caractérisé en ce qu'**une poignée qui entoure notamment la barre d'attelage (2, 3) est formée au niveau de la partie côté barre d'attelage de chaque élément formant bras.

13. Harnais selon l'une des revendications précédentes, **caractérisé en ce que** l'élément formant bras possède une portion côté barre d'attelage (12), une tête (13) et un élément jointif (14) disposé entre celles-ci.

14. Harnais selon l'une des revendications précédentes, **caractérisé en ce que** les barres d'attelage (2, 3) sont reliées à l'élément formant bras au-dessous de la sangle abdominale (21, 40).
